# EUROPEAN PATENT APPLICATION

(11) **EP 4 510 656 A1**
(43) Date of publication of application: **19.02.2025**
(21) Application number: 23787607.3
(22) Date of filing: 07.04.2023
(51) Int. Cl.: H04W 8/02

(54) **METHOD AND DEVICE FOR ACQUIRING VALID TIME, AND READABLE STORAGE MEDIUM**

(30) Priority: 11.04.2022 CN 202210377405
(71) Applicant: VIVO MOBILE COMMUNICATION CO., LTD., Dongguan, Guangdong 523863 (CN)
(72) Inventor: HE, Ranran, Dongguan, Guangdong 523863 (CN); ZHANG, Yanxia, Dongguan, Guangdong 523863 (CN)
(74) Representative: Lavoix
(86) International application number: PCT/CN2023/087022
(87) International publication number: WO 2023/197963

(57) **Abstract**

This application discloses a method and device for obtaining validity duration, and a readable storage medium, and relates to the field of communication technologies. The method includes: obtaining a first message and a second message by a terminal, where the first message includes satellite assistance information of a serving cell and first time, the second message includes satellite assistance information of a target cell, and the first time indicates validity duration of the satellite assistance information of the serving cell; and starting second time by the terminal, where the second time indicates validity duration of the satellite assistance information of the target cell, the terminal determining the second time based on the first message and/or the second message.

## Description

### CROSS-REFERENCE TO RELATED APPLICATIONS

This application claims priority to Chinese Patent Application No. 202210377405.1 filed on April 11, 2022, which is incorporated herein by reference in its entirety.

### TECHNICAL FIELD

This application relates to the field of communication technologies, and specifically, to a method and device for obtaining validity duration, and a readable storage medium.

### BACKGROUND

Currently, in non-terrestrial communication networks (Non-Terrestrial Networks, NTN), a network can only broadcast satellite assistance information of a serving cell and validity duration thereof through a system broadcast message. However, in addition to the satellite assistance information of the serving cell and the validity duration thereof, satellite assistance information of a neighboring cell and corresponding validity duration are also crucial for a terminal. If the terminal cannot obtain the validity duration of the satellite assistance information of the neighboring cell, the satellite assistance information applied by the terminal may be invalid, which may lead to the failure of the terminal to measure some neighboring cells, consequently affecting mobility management.

### SUMMARY

Embodiments of this application provide a method and device for obtaining validity duration, and a readable storage medium, which can resolve the problem of how a terminal obtains validity duration of satellite assistance information of a neighboring cell.

According to a first aspect, a method for obtaining validity duration is provided, including:
obtaining a first message and a second message by a terminal, where the first message includes satellite assistance information of a serving cell and first time, the second message includes satellite assistance information of a target cell, and the first time indicates validity duration of the satellite assistance information of the serving cell; and
starting second time by the terminal, where the second time indicates validity duration of the satellite assistance information of the target cell,
the terminal determining the second time based on the first message and/or the second message.

According to a second aspect, an apparatus for obtaining validity duration is provided, including:
an obtaining module, configured to obtain a first message and a second message by a terminal, where the first message includes satellite assistance information of a serving cell and first time, the second message includes satellite assistance information of a target cell, and the first time indicates validity duration of the satellite assistance information of the serving cell; and
a starting module, configured to start second time by the terminal, where the second time indicates validity duration of the satellite assistance information of the target cell,
the terminal determining the second time based on the first message and/or the second message.

According to a third aspect, a terminal is provided. The terminal includes a processor and a memory. The memory stores a program or instructions capable of being run on the processor. The program or instructions are executed by the processor to implement steps of the method according to the first aspect.

According to a fourth aspect, a terminal is provided, including a processor and a communication interface. The communication interface is configured to obtain a first message and a second message by a terminal, where the first message includes satellite assistance information of a serving cell and first time, the second message includes satellite assistance information of a target cell, and the first time indicates validity duration of the satellite assistance information of the serving cell. The processor is configured to start second time by the terminal, where the second time indicates validity duration of the satellite assistance information of the target cell, the terminal determining the second time based on the first message and/or the second message.

According to a fifth aspect, a readable storage medium is provided. The readable storage medium stores a program or instructions. The program or instructions are executed by a processor to implement steps of the method according to the first aspect.

According to a sixth aspect, a chip is provided. The chip includes a processor and a communication interface. The communication interface is coupled to the processor. The processor is configured to run a program or instructions to implement steps of the method according to the first aspect.

According to a seventh aspect, a computer program/program product is provided. The computer program/program product is stored in a storage medium. The computer program/program product is executed by at least one processor to implement steps of the method according to the first aspect.

In the embodiments of this application, based on the first message including the validity duration of the satellite assistance information of the serving cell and/or the second message including the satellite assistance information of the target cell, the terminal determines the second time that indicates the validity duration of the satellite assistance information of the target cell, so that the terminal can obtain the validity duration of the satellite assistance information of the neighboring cell, ensuring correct mobility management of the terminal.

### BRIEF DESCRIPTION OF THE DRAWINGS

FIG. 1 is a schematic diagram of an architecture of an NTN network;
FIG. 2 is a schematic flowchart of a method for obtaining validity duration according to an embodiment of this application;
FIG. 3 is a schematic diagram of a structure of an apparatus for obtaining validity duration according to an embodiment of this application;
FIG. 4 is a schematic diagram of a structure of a communication device according to an embodiment of this application; and
FIG. 5 is a schematic diagram of a structure of a terminal according to an embodiment of this application.

### DETAILED DESCRIPTION

The technical solutions in the embodiments of this application are clearly described in the following with reference to the accompanying drawings in the embodiments of this application. Apparently, the described embodiments are merely some rather than all of the embodiments of this application. All other embodiments obtained by a person of ordinary skill in the art based on the embodiments of this application fall within the protection scope of this application.

In the specification and claims of this application, the terms "first", "second", and the like are intended to distinguish between similar objects, but are not intended to describe a specific sequence or order. It should be understood that the terms used in this way are interchangeable in a proper case, so that the embodiments of this application can be implemented in an order other than the order shown or described herein. In addition, the objects distinguished by using "first" and "second" are usually of the same type, and a quantity of the objects is not limited, for example, there may be one or more first objects. In addition, "and/or" in the specification and claims indicates at least one of the connected objects, and the character "/" usually indicates an "or" relationship between the associated objects.

It is to be noted that the techniques described in the embodiments of this application are not limited to a long-term evolution (Long Term Evolution, LTE)/LTE-advanced (LTE-Advanced, LTE-A) system, and may be further applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technique may be applied to the systems and radio techniques mentioned above, and may also be applied to other systems and radio techniques. The following describes a new radio (New Radio, NR) system for the exemplary purpose and uses NR terminology throughout most of the following description, but these techniques may also be applied to a system other than the NR system, for example, the 6^{th} generation (6^{th} Generation, 6G) communication system.

Provided is a block diagram of a wireless communication system to which the embodiments of this application are applicable. The wireless communication system includes a terminal and a network-side device. The terminal may be a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a washing machine, or furniture), a game console, a personal computer (personal computer, PC), a teller machine, a self-service machine, or another terminal-side device. The wearable device includes: a smartwatch, a smart band, smart headphones, smart glasses, smart jewelry (a smart bangle, a smart bracelet, a smart ring, a smart necklace, a smart anklet, and a smart ankle chain), a smart wristband, smart clothing, and the like. It needs to be noted that a specific type of the terminal is not limited in the embodiments of this application. The network-side device may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a Wi-Fi node, or the like. The base station may be referred to as NodeB, evolved NodeB (eNB), an access point, a base transceiver station (Base Transceiver Station, BTS), a radio base station, a radio transceiver, a basic service set (Basic Service Set, BSS), an extended service set (Extended Service Set, ESS), home NodeB, home evolved NodeB, a transmitting receiving point (Transmitting Receiving Point, TRP), or another proper term in the field. The base station is not limited to a specific technical term as long as the same technical effect is achieved. It needs to be noted that only a base station in the NR system is used as an example for description in the embodiments of this application, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), and an application function (Application Function, AF). It needs to be noted that only a core network device in the NR system is used as an example for description in the embodiments of this application, but a specific type of the core network device is not limited.

To better understand the technical solutions in the embodiments of this application, the following content is first described:

### 1. Introduction of NTN

The non-terrestrial network is a network or network segment for transmission using a satellite or unmanned aircraft system (Unmanned Aircraft System, UAS) platform. Compared with a terrestrial communication system, a satellite-based non-terrestrial communication system has wider coverage, and is applicable to typical scenarios including a scenario in which a terrestrial base station cannot be built and a scenario in which a terrestrial base station is damaged, such as continuous coverage in remote mountainous regions, deserts, oceans, and forests, or emergency communication in a case that a natural disaster occurs or a terrestrial base station is damaged.

The satellite includes a low earth orbiting (Low Earth Orbiting, LEO) satellite, a medium earth orbiting (Medium Earth Orbiting, MEO) satellite, a geostationary earth orbiting (Geostationary Earth Orbiting, GEO) satellite, and a highly elliptical orbiting (Highly Elliptical Orbiting, HEO) satellite.

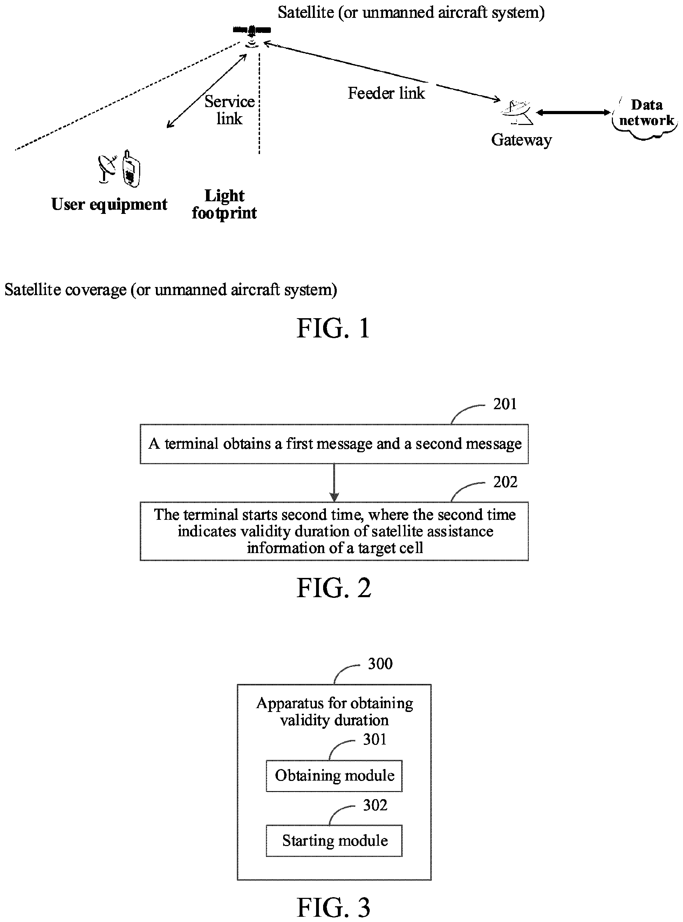

The typical scenarios of the non-terrestrial network include a transparent forwarding mode, that is, the satellite is used as a forwarding relay. As shown in FIG. 1, the typical scenarios of the non-terrestrial network further include a signal regeneration mode, that is, the satellite is directly used as a base station.

In the transparent forwarding mode, a link between the satellite and the terminal is a service link, and a link between the satellite and the terrestrial base station is a feeder link.

### 2. Ephemeris information of a serving cell

Satellite assistance information of a serving cell may be broadcast through a system broadcast message, including the following content:
(1) ephemeris (Ephemeris), where the ephemeris includes satellite ephemeris, and the satellite ephemeris may be expressed in the format of position and velocity state vectors, or may be expressed in the format of orbital parameters;
(2) common timing advance (Timing Advance, TA) parameters (common TA parameters), indicating the terminal to calculate timing advance information;
(3) validity duration of uplink synchronization information (ntnUlSyncValidityDuration);
(4) t-service (t-Service), indicating time when a cell stops a service;
(5) a cell reference position;
(6) epoch time (Epoch time);
(7) polarization information for downlink transmission, including left polarization, right polarization, and linear polarization;
(8) polarization information for uplink transmission, including left polarization, right polarization, and linear polarization;
(9) a timing advance reporting indication, indicating the terminal to report the timing advance;
(10) K_mac, indicating a scheduling offset provided by a network when downlink frame timing and uplink frame timing are not consistent on the next generation base station (the next Generation Node B, gNB); and
(11) CellSpecific_K_offset, indicating a scheduling offset for modifying a timing relationship in the NTN.

Epoch time and ntnUlSyncValidityDuration form validity duration of the satellite assistance information of the serving cell. To be specific, a period of time starting with Epoch time and having a length of ntnUlSyncValidityDuration indicates maximum time for the terminal to apply the assistance information when new assistance information is not obtained. If the validity duration expires, the terminal should re-obtain the satellite assistance information.

The following describes in detail a method for obtaining validity duration provided in the embodiments of this application through some embodiments and application scenarios thereof with reference to the accompanying drawings.

Referring to FIG. 2, an embodiment of this application provides a method for obtaining validity duration, including the following steps:

Step 201: A terminal obtains a first message and a second message.

The first message includes satellite assistance information of a serving cell and first time, the second message includes satellite assistance information of a target cell, and the first time indicates validity duration of the satellite assistance information of the serving cell.

Step 202: The terminal starts second time, where the second time indicates validity duration of the satellite assistance information of the target cell.

The terminal determines the second time based on the first message and/or the second message.

In the embodiments of this application, based on the first message including the validity duration of the satellite assistance information of the serving cell and/or the second message including the satellite assistance information of the target cell, the terminal determines the second time that indicates the validity duration of the satellite assistance information of the target cell, so that the terminal can obtain the validity duration of the satellite assistance information of the neighboring cell, ensuring correct mobility management of the terminal.

In some embodiments, the satellite assistance information of the serving cell may be NTN configuration information (for example, ntn-Config), and the first time may be epoch time (epoch Time). The satellite assistance information of the target cell may include NTN neighboring cell-related configuration information, such as NTN-NeighCellConfig information and NTN-NeighCellConfigList information.

In some embodiments, the terminal determines the second time based on the first message and/or the second message, which may be understood as that the terminal determines the second time based on whether there is the epoch time (epoch Time) in the NTN configuration information (for example, ntn-Config) provided by the NTN-NeighCellConfig information. If there is no epoch Time, the terminal uses epoch Time of serving satellite ephemeris (serving satellite ephemeris). If there is the epoch Time, the second time is determined based on the epoch Time of the serving cell. In other words, an SFN and a subframe that are indicated by a field (field) corresponding to the epoch Time correspond to an SFN and a subframe of the serving cell.

In some embodiments, if there is no epoch Time field in ntn-Config provided by NTN-NeighCellConfig, the terminal uses validity duration (validity duration) in the assistance information of the serving cell.

In some embodiments, the satellite assistance information includes at least one of the following:
(1) ephemeris information, where the ephemeris information includes satellite ephemeris, and the satellite ephemeris may be expressed in the format of position and velocity state vectors, or may be expressed in the format of orbital parameters;
(2) polarization information for downlink transmission, with values including left polarization, right polarization, and linear polarization;
(3) polarization information for uplink transmission, with values including left polarization, right polarization, and linear polarization;
(4) a timing advance reporting indication, indicating the terminal to report the timing advance;
(5) timing advance-related information, including timing advance information calculated by the terminal;
(6) K_mac, indicating a scheduling offset provided by a network when downlink frame timing and uplink frame timing are not consistent on gNB;
(7) CellSpecific_K_offset, indicating a scheduling offset for modifying a timing relationship in the NTN;
(8) t-Service, indicating time when a cell stops a service;
(9) a cell reference position;
(10) epoch time (Epoch time); and
(11) validity duration of uplink synchronization information (ntnUlSyncValidityDuration).

The first time includes:
(1) First moment Epoch time.
   (1.1) When the first moment is displayed and indicated through a system information block (System Information Block, SIB) or dedicated signaling, EpochTime is start time of a downlink (Downlink, DL) subframe and is indicated by a system frame number (System Frame Number, SFN) and a subframe number, and the SFN, the subframe number, and the satellite assistance information of the serving cell are indicated by one signaling.
   (1.2) When there is no field indicating the first moment and the first message is a system message, the first moment (Epoch time) is end time of scheduling a system information (System Information, SI) window of the first message, and the first message includes the satellite assistance information of the serving cell.
(2) First duration ntnUlSyncValidityDuration.

It needs to be noted that the action of the terminal starting the second time is applicable to any terminal state, such as an idle (idle) state, an inactive (inactive) state, and a connected state.

In a specific application scenario, both the first time and the second time may be timers, that is, the first time is specifically a first timer, and the second time is specifically a second timer. In other words, the terminal maintains the first timer for the serving cell and maintains the second timer for the target cell.

In a possible implementation, parameters of the first time include a first moment and first duration, and parameters of the second time include a second moment and second duration. In a specific implementation corresponding to a case that both the first time and the second time are timers, a start point of the first timer is the first moment, and a length of the first timer is the first duration; and a start point of the second timer is the second moment, and a length of the first timer is the second duration.

That the terminal determines the second time based on the first message and/or the second message includes the following steps:
(1) The terminal determines the second time based on the second message in a case that the second message includes the parameters of the second time.

In this embodiment of this application, the second message carries the second moment and the second duration, so that the terminal may determine the second time based on the second moment and the second duration.

(2) The terminal determines the second time based on some of the parameters of the first time and/or the second message in a case that the second message includes some of the parameters of the second time.

In this embodiment of this application, the second message carries only the second moment or carries only the second duration, so that the terminal determines the second time based on some of the parameters of the first time and/or the second message.

(3) In a case that the second message does not include the parameters of the second time, the terminal uses the first time as the second time, or the terminal determines the second time based on the parameters of the first time and/or the second message.

In this embodiment of this application, the second message does not carry the second moment or the second duration, so that the terminal uses the first time as the second time or the terminal determines the second time based on the parameters of the first time and/or the second message.

A specific implementation corresponding to a case that the terminal uses the first time as the second time may be understood as that the first timer is used as the second timer, that is, the terminal maintains one timer jointly for the serving cell and the target cell. A specific implementation corresponding to a case that the terminal determines the second time based on the parameters of the first time may be understood as that parameters of the first timer is used as parameters of the second timer, that is, the terminal maintains the first timer for the serving cell and maintains the second timer for the target cell.

In a possible implementation, that (2) the terminal determines the second time based on some of the parameters of the first time and/or the second message in a case that the second message includes some of the parameters of the second time includes the following steps:
(2.1) In a case that the second message includes the second duration but does not include the second moment, the terminal uses the first moment as the second moment, or determines the second moment based on a type of the second message.

In this embodiment of this application, if a network side does not provide the second moment but provides the second duration, the terminal uses the first moment as the second moment, and the terminal uses the second duration provided by the network side; or the terminal determines the second moment based on the type of the second message.

In a corresponding specific implementation, the terminal maintains the first timer for the serving cell, where the first timer has a start point of the first moment and a length of the first duration, and maintains the second timer for the target cell, where the second timer has a start point of the second moment and a length of the second duration.

(2.2) The terminal uses the first duration as the second duration in a case that the second message includes the second moment but does not include the second duration.

In this embodiment of this application, if a network side provides the second moment but does not provide the second duration, the terminal uses the second moment provided by the network side, and the terminal uses the first duration as the second duration.

In a corresponding specific implementation, the terminal maintains the first timer for the serving cell, where the first timer has a start point of the first moment and a length of the first duration, and maintains the second timer for the target cell, where the second timer has a start point of the second moment and a length of the second duration.

In a possible implementation, that (2.1) the terminal determines the second moment based on a type of the second message in a case that the second message includes the second duration but does not include the second moment includes the following step:
(2.1.1) The terminal uses a third moment as the second moment in a case that the second message is a system message, and the second message includes the second duration but does not include the second moment.

The third moment is end time of scheduling an SI window of the second message.

In this embodiment of this application, if a network side does not provide the second moment but provides the second duration, and if the second message is the system message, the terminal uses the end time of scheduling the SI window of the second message as the second moment.

In a corresponding specific implementation, the terminal maintains the first timer for the serving cell, where the first timer has a start point of the first moment and a length of the first duration, and maintains the second timer for the target cell, where the second timer has a start point of the second moment and a length of the second duration.

In a possible implementation, that (3) the terminal determines the second time based on the parameters of the first time and/or the second message in a case that the second message does not include the parameters of the second time includes:
in a case that the second message does not include the second moment or the second duration, using the first moment by the terminal as the second moment and using the first duration by the terminal as the second duration, or determining the second moment based on a type of the second message.

In this embodiment of this application, if a network side does not provide the second moment or the second duration, the terminal uses the first moment as the second moment, and uses the first duration as the second duration.

For example, if both the first time and the second time are timers, for the first time, a start point of the first timer is the first moment, and a length of the first timer is the first duration. When the network does not configure the second time, the terminal uses the first moment and the first duration as a start point and a length of the second timer, that is, the terminal starts the second timer at the first moment, and the length of the second timer is the first duration. In other words, the terminal maintains the first timer for the serving cell, where the first timer has a start point of the first moment and a length of the first duration, and maintains the second timer for the target cell, where the second timer has a start point of the second moment and a length of the second duration.

If the network side does not provide the second moment or the second duration, that the terminal determines the second moment based on the type of the second message and uses the first duration as the second duration includes: in a case that the second message is a system message, and the second message does not include the second moment or the second duration, using a third moment by the terminal as the second moment, and using the first duration as the second duration. The third moment is end time of scheduling an SI window of the second message.

In other words, the terminal maintains the first timer for the serving cell, where the first timer has a start point of the first moment and a length of the first duration, and maintains the second timer for the target cell, where the second timer has a start point of the second moment and a length of the second duration.

In a possible implementation, after the terminal starts the second time, the method further includes the following steps:
(1) The terminal re-obtains the second message in a case that the second time expires.

In this embodiment of this application, for the second time determined based on the first message and/or the second message, if the second time expires, which indicates that the satellite assistance information of the corresponding target cell reaches maximum time, the second message needs to be re-obtained.

(2) In a case that the terminal uses the first time as the second time and the first time expires, the terminal re-obtains the second message, or the terminal re-obtains the first message and the second message.

In this embodiment of this application, for the case in which the first time is used as the second time, that is, the case in which the terminal maintains one timer jointly for the serving cell and the target cell, if the first time expires, which indicates that the satellite assistance information of the corresponding target cell reaches maximum time, the second message needs to be re-obtained, or which indicates that both the satellite assistance information of the corresponding serving cell and the satellite assistance information of the corresponding target cell reach maximum time, the first message and the second message need to be re-obtained.

In a possible implementation, in a case that the second message includes the second moment, the second moment is indicated by an SFN and a subframe number or is indicated by absolute time (for example, universal time coordinated (Universal Time Coordinated, UTC)); and
in a case that the second message includes the second duration, a unit of the second duration includes any one of the following: second, millisecond, microsecond, minute, frame, subframe, symbol, and slot.

In a possible implementation, the first message and the second message meet any one of the following:
the first message and the second message are system messages;
one of the first message and the second message is a system message, and the other is dedicated signaling; and
the first message and the second message are dedicated signaling.

In other words, the following four cases are included:
1) first message: system message; and second message: system message;
2) first message: system message; and second message: dedicated signaling;
3) first message: dedicated signaling; and second message: system message; or
4) first message: dedicated signaling; and second message: dedicated signaling.

In a possible implementation, the first message and the second message are a same message, or the first message and the second message are different messages.

In a possible implementation, the validity duration of the satellite assistance information of the serving cell indicates maximum time for the terminal to apply assistance information of the serving cell in a case that satellite assistance information of a new serving cell is not obtained; and
the validity duration of the satellite assistance information of the target cell indicates maximum time for the terminal to apply assistance information of the target cell in a case that satellite assistance information of a new target cell is not obtained.

An execution body of the method for obtaining the validity duration provided in the embodiments of this application may be an apparatus for obtaining validity duration. In the embodiments of this application, the apparatus for obtaining the validity duration provided in the embodiments of this application is described by using an example in which the apparatus for obtaining the validity duration executes the method for obtaining the validity duration.

Referring to FIG. 3, an embodiment of this application provides an apparatus 300 for obtaining validity duration, including:
an obtaining module 301, configured to obtain a first message and a second message by a terminal, where the first message includes satellite assistance information of a serving cell and first time, the second message includes satellite assistance information of a target cell, and the first time indicates validity duration of the satellite assistance information of the serving cell; and
a starting module 302, configured to start second time by the terminal, where the second time indicates validity duration of the satellite assistance information of the target cell,
the terminal determining the second time based on the first message and/or the second message.

Optionally, the terminal determining the second time based on the first message and/or the second message includes:
determining the second time by the terminal based on the second message in a case that the second message includes parameters of the second time;
determining the second time by the terminal based on some of the parameters of the second time in a case that the second message includes some of the parameters of the second time; or
in a case that the second message does not include parameters of the second time, using the first time by the terminal as the second time, or determining the second time by the terminal based on parameters of the first time, where
the parameters of the first time include a first moment and first duration, and the parameters of the second time include a second moment and second duration.

Optionally, the determining the second time by the terminal based on some of the parameters of the second time in a case that the second message includes some of the parameters of the second time includes:
in a case that the second message includes the second duration but does not include the second moment, using the first moment by the terminal as the second moment, or determining the second moment based on a type of the second message; or
using the first duration by the terminal as the second duration in a case that the second message includes the second moment but does not include the second duration.

Optionally, the determining the second moment based on a type of the second message in a case that the second message includes the second duration but does not include the second moment includes:
using a third moment by the terminal as the second moment in a case that the second message is a system message, and the second message includes the second duration but does not include the second moment, where
the third moment is end time of scheduling a system information SI window of the second message.

Optionally, the determining the second time by the terminal based on parameters of the first time and/or the second message in a case that the second message does not include parameters of the second time includes:
in a case that the second message does not include the second moment or the second duration, using the first moment by the terminal as the second moment or determining the second moment based on a type of the second message, and using the first duration by the terminal as the second duration.

Optionally, the determining the second moment based on a type of the second message in a case that the second message does not include the second moment or the second duration includes:
using a third moment by the terminal as the second moment in a case that the second message is a system message, and the second message does not include the second moment or the second duration, where
the third moment is end time of scheduling a system information SI window of the second message.

Optionally, after the terminal starts the second time, the obtaining module is further configured to:
re-obtain the second message by the terminal in a case that the second time expires; or
in a case that the terminal uses the first time as the second time and the first time expires, re-obtain the second message by the terminal, or re-obtain the first message and the second message by the terminal.

Optionally, in a case that the second message includes the second moment, the second moment is indicated by a system frame number SFN and a subframe number or is indicated by absolute time; and
in a case that the second message includes the second duration, a unit of the second duration includes any one of the following: second, millisecond, microsecond, minute, frame, subframe, symbol, and slot.

Optionally, the first message and the second message meet any one of the following:
the first message and the second message are system messages;
one of the first message and the second message is a system message, and the other is dedicated signaling; and
the first message and the second message are dedicated signaling.

Optionally, the first message and the second message are a same message, or the first message and the second message are different messages.

Optionally, the validity duration of the satellite assistance information of the serving cell indicates maximum time for the terminal to apply assistance information of the serving cell in a case that satellite assistance information of a new serving cell is not obtained; and
the validity duration of the satellite assistance information of the target cell indicates maximum time for the terminal to apply assistance information of the target cell in a case that satellite assistance information of a new target cell is not obtained.

The apparatus for obtaining the validity duration in the embodiments of this application may be an electronic device, for example, an electronic device with an operating system, or may be a component in an electronic device, for example, an integrated circuit or chip. The electronic device may be a terminal or may be another device other than the terminal. For example, the terminal may include, but is not limited to, the listed types of the terminal 11, and the another device may be a server, a network attached storage (Network Attached Storage, NAS), or the like. This is not specifically limited in the embodiments of this application.

The apparatus for obtaining the validity duration provided in the embodiments of this application can implement the processes implemented in the method embodiment of FIG. 2, and achieve the same technical effects. To avoid repetition, details are not described herein again.

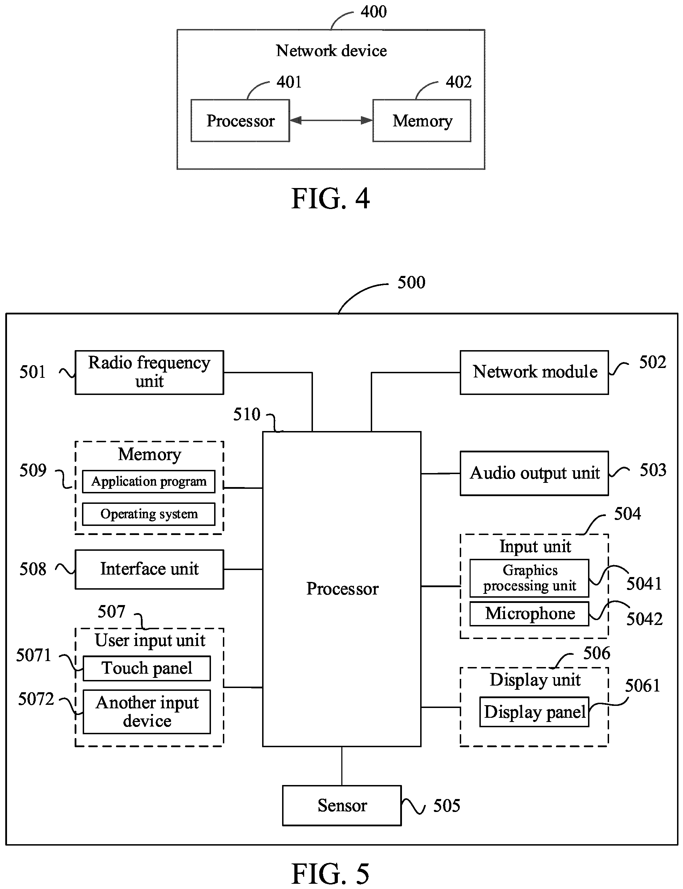

Optionally, as shown in FIG. 4, an embodiment of this application further provides a communication device 400, including a processor 401 and a memory 402. The memory 402 stores a program or instructions capable of being run on the processor 401. For example, when the communication device 400 is a terminal, the program or instructions are executed by the processor 401 to implement steps of the embodiments of the method for obtaining the validity duration, and the same technical effects can be achieved. When the communication device 400 is a network-side device, the program or instructions are executed by the processor 401 to implement steps of the embodiments of the method for obtaining the validity duration, and the same technical effects can be achieved. To avoid repetition, details are not described herein again.

An embodiment of this application further provides a terminal, including a processor and a communication interface. The communication interface is configured to obtain a first message and a second message by a terminal, where the first message includes satellite assistance information of a serving cell and first time, the second message includes satellite assistance information of a target cell, and the first time indicates validity duration of the satellite assistance information of the serving cell. The processor is configured to determine second time by the terminal based on the first message and/or the second message, where the second time indicates validity duration of the satellite assistance information of the target cell. This terminal embodiment corresponds to the foregoing method embodiment on the terminal side. The implementation processes and implementations of the method embodiment may be applied in this terminal embodiment, and the same technical effects can be achieved. Specifically, FIG. 5 is a schematic diagram of a hardware structure of a terminal according to an embodiment of this application.

The terminal 500 includes, but is not limited to: at least some of components such as a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (for example, a battery) for supplying power to the components. The power supply may be logically connected to the processor 510 through a power management system, to implement functions such as charging, discharging, and power consumption management through the power management system. The terminal structure shown in FIG. 5 does not constitute a limitation on the terminal, and the terminal may include more or fewer components shown in the figure, or combine some components, or have different component arrangements. Details are not described herein again.

It should be understood that, in the embodiments of this application, the input unit 504 may include a graphics processing unit (Graphics Processing Unit, GPU) 5041 and a microphone 5042, and the graphics processing unit 5041 processes image data of static images or videos obtained by an image capture apparatus (for example, a camera) in a video capture mode or an image capture mode. The display unit 506 may include a display panel 5061, and the display panel 5061 may be configured in the form of a liquid crystal display, an organic light-emitting diode, or the like. The user input unit 507 includes at least one of a touch panel 5071 and another input device 5072. The touch panel 5071 is also referred to as a touchscreen. The touch panel 5071 may include two parts: a touch detection apparatus and a touch controller. The another input device 5072 may include, but is not limited to, a physical keyboard, a function key (such as a volume control key or a switch key), a track ball, a mouse, and a joystick. Details are not described herein again.

In the embodiments of this application, the radio frequency unit 501 receives downlink data from a network-side device, and then transmits the downlink data to the processor 510 for processing. In addition, the radio frequency unit 501 may send uplink data to the network-side device. Usually, the radio frequency unit 501 includes, but is not limited to, an antenna, an amplifier, a transceiver, a coupler, a low noise amplifier, a duplexer, and the like.

The memory 509 may be configured to store a software program or instructions and various data. The memory 509 may mainly include a first storage area storing a program or instructions and a second storage area storing data. The first storage area may store an operating system, an application program or instructions required by at least one function (such as a sound playing function and an image displaying function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 509 in the embodiments of this application includes, but is not limited to, these memories and any other suitable types of memories.

The processor 510 may include one or more processing units. Optionally, the processor 510 may integrate an application processor and a modem processor. The application processor mainly processes an operating system, a user interface, an application program, and other operations. The modem processor mainly processes a wireless communication signal, for example, a baseband processor. It may be understood that the modem processor may not be integrated into the processor 510.

The radio frequency unit 501 is configured to obtain a first message and a second message by a terminal, where the first message includes satellite assistance information of a serving cell and first time, the second message includes satellite assistance information of a target cell, and the first time indicates validity duration of the satellite assistance information of the serving cell.

The processor 510 is configured to start second time by the terminal, where the second time indicates validity duration of the satellite assistance information of the target cell,
the terminal determining the second time based on the first message and/or the second message.

Optionally, the terminal determining the second time based on the first message and/or the second message includes:
determining the second time by the terminal based on the second message in a case that the second message includes parameters of the second time;
determining the second time by the terminal based on some of the parameters of the second time in a case that the second message includes some of the parameters of the second time; or
in a case that the second message does not include parameters of the second time, using the first time by the terminal as the second time, or determining the second time by the terminal based on parameters of the first time, where
the parameters of the first time include a first moment and first duration, and the parameters of the second time include a second moment and second duration.

Optionally, the determining the second time by the terminal based on some of the parameters of the second time in a case that the second message includes some of the parameters of the second time includes:
in a case that the second message includes the second duration but does not include the second moment, using the first moment by the terminal as the second moment, or determining the second moment based on a type of the second message; or
using the first duration by the terminal as the second duration in a case that the second message includes the second moment but does not include the second duration.

Optionally, the determining the second moment based on a type of the second message in a case that the second message includes the second duration but does not include the second moment includes:
using a third moment by the terminal as the second moment in a case that the second message is a system message, and the second message includes the second duration but does not include the second moment, where
the third moment is end time of scheduling a system information SI window of the second message.

Optionally, the determining the second time by the terminal based on parameters of the first time and/or the second message in a case that the second message does not include parameters of the second time includes:
in a case that the second message does not include the second moment or the second duration, using the first moment by the terminal as the second moment or determining the second moment based on a type of the second message, and using the first duration by the terminal as the second duration.

Optionally, the determining the second moment based on a type of the second message in a case that the second message does not include the second moment or the second duration includes:
using a third moment by the terminal as the second moment in a case that the second message is a system message, and the second message does not include the second moment or the second duration, where
the third moment is end time of scheduling a system information SI window of the second message.

Optionally, after the terminal starts the second time, the radio frequency unit 501 is further configured to:
re-obtain the second message by the terminal in a case that the second time expires; or
in a case that the terminal uses the first time as the second time and the first time expires, re-obtain the second message by the terminal, or re-obtain the first message and the second message by the terminal.

Optionally, in a case that the second message includes the second moment, the second moment is indicated by a system frame number SFN and a subframe number or is indicated by absolute time; and
in a case that the second message includes the second duration, a unit of the second duration includes any one of the following: second, millisecond, microsecond, minute, frame, subframe, symbol, and slot.

Optionally, the first message and the second message meet any one of the following:
the first message and the second message are system messages;
one of the first message and the second message is a system message, and the other is dedicated signaling; and
the first message and the second message are dedicated signaling.

Optionally, the first message and the second message are a same message, or the first message and the second message are different messages.

Optionally, the validity duration of the satellite assistance information of the serving cell indicates maximum time for the terminal to apply assistance information of the serving cell in a case that satellite assistance information of a new serving cell is not obtained; and
the validity duration of the satellite assistance information of the target cell indicates maximum time for the terminal to apply assistance information of the target cell in a case that satellite assistance information of a new target cell is not obtained.

An embodiment of this application further provides a readable storage medium. The readable storage medium stores a program or instructions. The program or instructions are executed by a processor to implement the processes of the embodiments of the method for obtaining the validity duration, and the same technical effects can be achieved. To avoid repetition, details are not described herein again.

The processor is the processor in the terminal in the foregoing embodiment. The readable storage medium includes a computer-readable storage medium, such as a computer read-only memory ROM, a random access memory RAM, a magnetic disk, or an optical disc.

An embodiment of this application provides a chip. The chip includes a processor and a communication interface. The communication interface is coupled to the processor. The processor is configured to run a program or instructions to implement the processes of the embodiments of the method for obtaining the validity duration, and the same technical effects can be achieved. To avoid repetition, details are not described herein again.

It should be understood that the chip provided in this embodiment of this application may also be referred to as a system-level chip, a system chip, a chip system, or a system on chip.

An embodiment of this application provides a computer program/program product. The computer program/program product is stored in a storage medium. The computer program/program product is executed by at least one processor to implement the processes of the embodiments of the method for obtaining the validity duration, and the same technical effects can be achieved. To avoid repetition, details are not described herein again.

It needs to be noted that, in this specification, the term "include", "comprise", or any other variant thereof is intended to cover a non-exclusive inclusion, so that a process, a method, an object, or an apparatus that includes a series of elements not only includes such elements, but also includes other elements not expressly listed, or further includes elements inherent to such process, method, object, or apparatus. If no more limitations are made, an element limited by "include a/an..." does not exclude other same elements existing in the process, method, object, or apparatus that includes the element. In addition, it needs to be noted that the scope of the method and apparatus in the implementations of this application is not limited to performing functions in the shown or discussed order, and may further include performing functions in a substantially simultaneous manner or in reverse order based on the involved functions. For example, the described method may be performed in an order different from the described order, and various steps may be added, omitted, or combined. In addition, the features described in some examples may be combined in other examples.

According to the descriptions in the foregoing implementations, a person skilled in the art may clearly learn that the method according to the foregoing embodiments may be implemented by software with a necessary general-purpose hardware platform, or certainly by hardware, but the former is the preferred implementation in many cases. Based on such an understanding, the technical solutions of this application essentially or the part contributing to the related art may be presented in the form of a computer software product. The computer software product is stored in a storage medium (such as a ROM/RAM, a magnetic disk, or an optical disc), including several instructions to enable a terminal (which may be a mobile phone, a computer, a server, an air-conditioner, a network device, or the like) to perform the methods in the embodiments of this application.

The embodiments of this application are described above with reference to the accompanying drawings, but this application is not limited to the foregoing specific implementations. The foregoing specific implementations are merely examples rather than limitations. Under the inspiration of this application, a person of ordinary skill in the art may also make many forms without departing from the purpose of this application and the protection scope of the claims, which are all within the protection scope of this application.

## Claims

1. A method for obtaining validity duration, comprising:
obtaining a first message and a second message by a terminal, wherein the first message comprises satellite assistance information of a serving cell and first time, the second message comprises satellite assistance information of a target cell, and the first time indicates validity duration of the satellite assistance information of the serving cell; and
starting second time by the terminal, wherein the second time indicates validity duration of the satellite assistance information of the target cell,
wherein the terminal determines the second time based on the first message and/or the second message.

2. The method according to claim 1, wherein the terminal determining the second time based on the first message and/or the second message comprises:
determining the second time by the terminal based on the second message in a case that the second message comprises parameters of the second time;
determining the second time by the terminal based on some of parameters of the first time and/or the second message in a case that the second message comprises some of the parameters of the second time; or
in a case that the second message does not comprise parameters of the second time, using the first time by the terminal as the second time, or determining the second time by the terminal based on parameters of the first time and/or the second message, wherein the parameters of the first time comprise a first moment and first duration, and the parameters of the second time comprise a second moment and second duration.

3. The method according to claim 2, wherein the determining the second time by the terminal based on some of parameters of the first time and/or the second message in a case that the second message comprises some of the parameters of the second time comprises:
in a case that the second message comprises the second duration but does not comprise the second moment, using the first moment by the terminal as the second moment, or determining the second moment based on a type of the second message; or
using the first duration by the terminal as the second duration in a case that the second message comprises the second moment but does not comprise the second duration.

4. The method according to claim 3, wherein the determining the second moment based on a type of the second message in a case that the second message comprises the second duration but does not comprise the second moment comprises:
using a third moment by the terminal as the second moment in a case that the second message is a system message, and the second message comprises the second duration but does not comprise the second moment, wherein
the third moment is end time of scheduling a system information SI window of the second message.

5. The method according to claim 2, wherein the determining the second time by the terminal based on parameters of the first time and/or the second message in a case that the second message does not comprise parameters of the second time comprises:
in a case that the second message does not comprise the second moment or the second duration, using the first moment by the terminal as the second moment or determining the second moment based on a type of the second message, and using the first duration by the terminal as the second duration.

6. The method according to claim 5, wherein the determining the second moment based on a type of the second message in a case that the second message does not comprise the second moment or the second duration comprises:
using a third moment by the terminal as the second moment in a case that the second message is a system message, and the second message does not comprise the second moment or the second duration, wherein
the third moment is end time of scheduling a system information SI window of the second message.

7. The method according to claim 1 or 2, wherein after the starting second time by the terminal, the method further comprises:
re-obtaining the second message by the terminal in a case that the second time expires; or
in a case that the terminal uses the first time as the second time and the first time expires, re-obtaining the second message by the terminal, or re-obtaining the first message and the second message by the terminal.

8. The method according to any one of claims 2 to 5, wherein
in a case that the second message comprises the second moment, the second moment is indicated by a system frame number SFN and a subframe number or is indicated by absolute time; and
in a case that the second message comprises the second duration, a unit of the second duration comprises any one of the following: second, millisecond, microsecond, minute, frame, subframe, symbol, and slot.

9. The method according to any one of claims 1 to 8, wherein the first message and the second message meet any one of the following:
the first message and the second message are system messages;
one of the first message and the second message is a system message, and the other is dedicated signaling; and
the first message and the second message are dedicated signaling.

10. The method according to any one of claims 1 to 8, wherein the first message and the second message are a same message, or the first message and the second message are different messages.

11. The method according to claim 1, wherein the validity duration of the satellite assistance information of the serving cell indicates maximum time for the terminal to apply assistance information of the serving cell in a case that satellite assistance information of a new serving cell is not obtained; and
the validity duration of the satellite assistance information of the target cell indicates maximum time for the terminal to apply assistance information of the target cell in a case that satellite assistance information of a new target cell is not obtained.

12. An apparatus for obtaining validity duration, comprising:
an obtaining module, configured to obtain a first message and a second message by a terminal, wherein the first message comprises satellite assistance information of a serving cell and first time, the second message comprises satellite assistance information of a target cell, and the first time indicates validity duration of the satellite assistance information of the serving cell; and
a starting module, configured to start second time by the terminal, wherein the second time indicates validity duration of the satellite assistance information of the target cell,
wherein the terminal determines the second time based on the first message and/or the second message.

13. The apparatus according to claim 12, wherein the terminal determining the second time based on the first message and/or the second message comprises:
determining the second time by the terminal based on the second message in a case that the second message comprises parameters of the second time;
determining the second time by the terminal based on some of parameters of the first time and/or the second message in a case that the second message comprises some of the parameters of the second time; or
in a case that the second message does not comprise parameters of the second time, using the first time by the terminal as the second time, or determining the second time by the terminal based on parameters of the first time and/or the second message, wherein
the parameters of the first time comprise a first moment and first duration, and the parameters of the second time comprise a second moment and second duration.

14. The apparatus according to claim 13, wherein the determining the second time by the terminal based on some of parameters of the first time and/or the second message in a case that the second message comprises some of the parameters of the second time comprises:
in a case that the second message comprises the second duration but does not comprise the second moment, using the first moment by the terminal as the second moment, or determining the second moment based on a type of the second message; or
using the first duration by the terminal as the second duration in a case that the second message comprises the second moment but does not comprise the second duration.

15. The apparatus according to claim 14, wherein the determining the second moment based on a type of the second message in a case that the second message comprises the second duration but does not comprise the second moment comprises:
using a third moment by the terminal as the second moment in a case that the second message is a system message, and the second message comprises the second duration but does not comprise the second moment, wherein
the third moment is end time of scheduling a system information SI window of the second message.

16. The apparatus according to claim 13, wherein the determining the second time by the terminal based on parameters of the first time and/or the second message in a case that the second message does not comprise parameters of the second time comprises:
in a case that the second message does not comprise the second moment or the second duration, using the first moment by the terminal as the second moment or determining the second moment based on a type of the second message, and using the first duration by the terminal as the second duration.

17. The apparatus according to claim 16, wherein the determining the second moment based on a type of the second message in a case that the second message does not comprise the second moment or the second duration comprises:
using a third moment by the terminal as the second moment in a case that the second message is a system message, and the second message does not comprise the second moment or the second duration, wherein
the third moment is end time of scheduling a system information SI window of the second message.

18. The apparatus according to claim 12 or 13, wherein after the terminal starts the second time, the obtaining module is further configured to:
re-obtain the second message by the terminal in a case that the second time expires; or
in a case that the terminal uses the first time as the second time and the first time expires, re-obtain the second message by the terminal, or re-obtain the first message and the second message by the terminal.

19. The apparatus according to any one of claims 13 to 16, wherein
in a case that the second message comprises the second moment, the second moment is indicated by a system frame number SFN and a subframe number or is indicated by absolute time; and
in a case that the second message comprises the second duration, a unit of the second duration comprises any one of the following: second, millisecond, microsecond, minute, frame, subframe, symbol, and slot.

20. The apparatus according to any one of claims 12 to 19, wherein the first message and the second message meet any one of the following:
the first message and the second message are system messages;
one of the first message and the second message is a system message, and the other is dedicated signaling; and
the first message and the second message are dedicated signaling.

21. The apparatus according to any one of claims 12 to 19, wherein the first message and the second message are a same message, or the first message and the second message are different messages.

22. The apparatus according to claim 12, wherein the validity duration of the satellite assistance information of the serving cell indicates maximum time for the terminal to apply assistance information of the serving cell in a case that satellite assistance information of a new serving cell is not obtained; and
the validity duration of the satellite assistance information of the target cell indicates maximum time for the terminal to apply assistance information of the target cell in a case that satellite assistance information of a new target cell is not obtained.

23. A terminal, comprising a processor and a memory, wherein the memory stores a program or instructions capable of being run on the processor, and the program or instructions are executed by the processor to implement steps of the method for obtaining the validity duration according to any one of claims 1 to 11.

24. A readable storage medium, wherein the readable storage medium stores a program or instructions, and the program or instructions are executed by a processor to implement steps of the method for obtaining the validity duration according to any one of claims 1 to 11.
